(19) Europäisches Patentamt
European Patent Office
Office européen des brevets

(11) **EP 2 711 815 A2**

(12) **EUROPEAN PATENT APPLICATION**

(43) Date of publication:
**26.03.2014 Bulletin 2014/13**

(51) Int Cl.:
**G06F 3/041** (2006.01)     **G06F 3/044** (2006.01)

(21) Application number: **13183096.0**

(22) Date of filing: **05.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.09.2012 JP 2012206556**

(71) Applicant: **Wacom Co., Ltd.**
**Kazo-shi, Saitama**
**Tokyo 349-1148 (JP)**

(72) Inventor: **Katsurahira, Yuji**
**Shinjuku-ku, Tokyo 160-6131 (JP)**

(74) Representative: **Appelt, Christian W.**
**Boehmert & Boehmert**
**Pettenkoferstrasse 20-22**
**80336 München (DE)**

(54) **Position detecting device**

(57)     A position detecting device detects both a finger and a stylus radiating an electric field. The device includes: a substantially transparent sensor disposed on a display device and formed by X-electrodes and Y-electrodes; an X-selecting circuit for selecting two sets of X-electrodes as a positive terminal and a negative terminal; a Y-selecting circuit for selecting two sets of Y-electrodes as a positive terminal and a negative terminal; a driving signal generating circuit for generating signals shifted in phase from each other by 180° as a positive signal and a negative signal; a differential amplifier for amplifying a difference between signals occurring in the positive terminal and the negative terminal selected by one, or respectively each, of the X-selecting circuit and the Yselecting circuit; and a balanced switching circuit for switching connection of the positive terminal and the negative terminal to the driving signal generating circuit or to the differential amplifier.

FIG. 3

DIAGRAM SHOWING CONFIGURATION OF POSITION DETECTING DEVICE

**Description**

BACKGROUND

Technical Field

The present invention relates to a transparent position detecting device that is disposed on a front surface of a display device and which enables operation with both of a finger and a pen type position indicator (pen type position indicator will hereinafter be referred to as a stylus).

Description of the Related Art

Tablet type information terminals including a touch panel have recently come into frequent use. Some devices of this kind enable input with a stylus in order to facilitate the input of handwritten characters and the drawing of pictures, illustrations, and the like, which are difficult with a finger. A method disclosed in Patent Document 1 (Japanese Patent Laid-Open No. Sho 63-70326) is widely used as a pen input technique for this purpose.

According to the method of the above Patent Document 1, a resonance circuit is provided in a position indicator as a stylus, and an indicated position is detected by electromagnetic induction between the position indicator and a tablet. However, a sensor forming the tablet needs to be provided on the back of a display device. This is because the sensor cannot be made transparent due to a need to feed a certain level of current through loop coils forming the sensor. Therefore the sensor for detecting a stylus cannot be made in common with a sensor for detecting a position touched by a finger (the detection of a position touched by a finger will hereinafter be referred to as touch detection), which results in problems such as an increase in cost, complication of the structure of the position detecting device, and the like. In addition, separate processing circuits are necessary for touch detection by a capacitive system and stylus detection by an electromagnetic induction system (detection of a position indicated by a stylus will be referred to as stylus detection in the present specification), so that circuit configuration is complicated.

For this reason, many attempts have been made to enable stylus detection using a transparent sensor, or to enable input with both a finger and a stylus using the same sensor.

According to Patent Document 2 (Japanese Patent Laid-Open No. 2007-164356) filed by the same applicant as Patent Document 1, a sensor forming a tablet can be made transparent by incorporating an electric double layer capacitor into a stylus. However, this device does not perform touch detection.

In addition, Patent Document 3 (Japanese Patent Laid-Open No. 2005-537570) shows a digitizer that determines a position indicated by a stylus on the basis of a signal from a differential amplifier disposed in association with each electrode of a transparent sensor disposed on a display device. However, this device does not perform touch detection.

In addition, Patent Document 4 (J-P-T-2006-517319) filed by the same applicant as Patent Document 3 describes, as an embodiment, a theory for performing detection of the position of an object generating an electromagnetic field and touch detection based on capacitance by the same sensor, to achieve position detection based on two different kinds of interactions. However, the theory described in the patent document assumes a particular use environment, and cannot provide a device practically usable for general purpose applications in various noise environments.

In addition, Patent Document 5 (Japanese Patent Laid-Open No. Hei 6-250772) discloses a device that determines a position indicated by a pen on the basis of capacitive coupling to a tablet and changes the frequency of a signal according to a state of operation of the pen. According to this patent document, a sensor of the tablet can be made transparent. However, it is difficult to determine a coordinate position accurately due to effect of noise produced by a display device when the sensor is combined with the display device.

Patent Document 6 (Japanese Patent Laid-Open No. Hei 6-337752) filed by the same applicant as Patent Document 5 discloses a device that is provided with an analog multiplexer selecting two of electrode lines of a tablet and which subjects signals from the two selected electrode lines to differential amplification to eliminate effect of external noise. However, this device does not perform touch detection.

In addition, Patent Document 7 (Japanese Patent Laid-Open No. Hei 8-179871) filed by the same applicant as Patent Documents 5 and 6 discloses a "combination touch panel and transparent digitizer," which enables input with both of a finger and a stylus. In Patent Document 7, Y-side electrodes are operated for signal detection at a time of stylus detection, and are operated so as to supply an oscillating signal at a time of touch detection.

Prior Art Documents

Patent Documents

Patent Document 1

Japanese Patent Laid-Open No. Sho 63-70326
Patent Document 2
Japanese Patent Laid-Open No. 2007-164356
Patent Document 3
Japanese Patent Laid-Open No. 2005-537570
Patent Document 4
J-P-T-2006-517319
Patent Document 5
Japanese Patent Laid-Open No. Hei 6-250772
Patent Document 6
Japanese Patent Laid-Open No. Hei 6-337752
Patent Document 7
Japanese Patent Laid-Open No. Hei 8-179871

BRIEF SUMMARY

Problems to be Solved by the Invention

There are many problems in performing input with both of a finger and a stylus on a position detecting device of an input device, the position detecting device being integral with a display device and transparent.

A first problem is a negative effect of using a stylus of an electromagnetic induction system. In the case of a stylus without a power supply as in Patent Document 1, an exciting coil needs to be provided separately from a transparent sensor in order to transmit a strong electromagnetic signal from a tablet. However, it is difficult to make such an exciting coil transparent.

In Patent Document 3, an exciting coil is provided on the periphery of the display device in order to solve this problem. However, a voltage induced in the resonance circuit of the stylus greatly differs between a case where the stylus is located in a central part of the display device and a case where the stylus is located in a peripheral part of the display device. Thus, not only is it necessary to greatly increase the dynamic range of a received signal processing circuit but also accurate coordinate detection cannot be performed in the central part where a weakest received signal is obtained. In addition, a display device of a large size means a large area of the exciting coil. Thus, an exciting current fed through the exciting coil needs to be increased, so that a current consumed in the position detecting device is increased.

In Patent Document 2, to deal with the first problem, the electric double layer capacitor is provided within the stylus, and oscillation is performed with the electric double layer capacitor as a power supply. Thereby a need for transmission from the tablet is eliminated, and the sensor of the tablet is made transparent. However, this method does not solve a second problem to be described later.

In Patent Document 4 and Patent Document 5, to deal with the first problem, one terminal of a resonance circuit provided to a stylus is electrically connected to an electrode provided at a tip portion of the stylus. When a signal is supplied from an electrode of the tablet to the stylus, a voltage is induced in the resonance circuit through capacitive coupling between the tablet and the stylus. A signal based on the induced voltage is detected by the electrode of the tablet through the capacitive coupling. According to this, the sensor of the tablet can be made transparent in theory. However, because of the very low voltage induced in the resonance circuit through the capacitive coupling, it is not possible to determine a coordinate position stably.

A second problem is another negative effect of using a stylus of the electromagnetic induction system. In order to detect the position of a stylus of the electromagnetic induction system, the electrodes of the sensor of the tablet need to have a loop shape. On the other hand, when the touching of a finger is performed in the capacitive system, there need to be line-shaped electrodes. Therefore common electrodes cannot be used to detect the positions of a finger and the stylus. In Patent Document 4 and Patent Document 5, as described above, a signal generated in the resonance circuit is transmitted through the capacitive coupling between the tablet and the stylus, and therefore the electrodes of the tablet do not need to have a loop shape. However, very weak signals are detected by these methods, so that coordinates cannot be determined stably.

A third problem is that a coordinate position cannot be detected stably due to noise produced by the display device. Patent Document 3, Patent Document 4, Patent Document 6, and Patent Document 7 each reduce effect of external noise by selecting two electrodes and connecting the electrodes to a differential amplifier, but do not solve a fourth problem and a fifth problem.

A fourth problem is that because of high resistance of the transparent electrodes of the sensor forming the tablet, a detected signal level becomes extremely different according to the position of a finger or the stylus. In detection of the position of a finger, in particular, a stronger signal is detected at a position closer to a driving end, and a stronger signal is detected at a position closer to a receiving end. Therefore the gain of the amplifier needs to be changed according to the position. Patent Document 3, Patent Document 4, Patent Document 6, and Patent Document 7 use a differential amplifier, so that level variations in a direction of arrangement of receiving electrodes can be reduced. However, level variations in a direction of arrangement of driving electrodes are not remedied.

A fifth problem is another problem resulting from the transparency of the electrodes of the sensor forming the tablet. Transparent electrodes not only have a high resistance but also present a difficulty in uniformizing the capacitances of a plurality of points of intersection formed by line-shaped electrodes in an X-axis direction and line-shaped electrodes in a Y-axis direction. This is also a problem in manufacturing of transparent sensors, and is due to a fact that the width of each electrode and gaps between the X-electrodes and Y-electrodes cannot be made uniform. These problems directly affect a detected signal level. It is for this reason that Patent Document 3 and Patent Document 4 recommend providing correction data according to each individual sensor and the position of each individual sensor to correct the detected level.

In addition, in Patent Document 7, a signal level at each point of intersection when no finger is present on the sensor is set as a reference, and a slight decrease in signal level which decrease is caused by a finger is detected. It is clear, however, that this reference level is different for each device, and is different according to position even in the same device. Therefore similar correcting means is required. However, with methods as in Patent Document 3, Patent Document 4, and Patent Document 7, data on the characteristics of each individual device needs to be extracted and correction data needs to be incorporated. It is thus difficult to provide the devices in large quantities and at a low price.

According to one aspect of the present invention, all of the problems described above may be solved.

According to one aspect of the present invention, a position detecting device is provided that enables operation with either a finger or a stylus based on an identical (common) transparent sensor disposed integrally with a display device.

According to one aspect of the present invention, a position detecting device is provided that can accurately detect and input the coordinate position of a finger and a stylus without being affected by noise produced by a display device, by using a transparent sensor disposed integrally with a display device.

According to one aspect of the present invention, a transparent position detecting device may be provided in large quantities and at a low price by the use of a sensor formed by transparent electrodes and without a need to measure and incorporate correction data for each device.

Means for Solving the Problems

According to one aspect, the present invention proposes a transparent position detecting device for detecting and inputting a position indicated by a finger or a stylus on a display device capable of refreshing display in each fixed period. The position detecting device includes: a substantially transparent sensor disposed on the display device and formed by X-electrodes and Y-electrodes; an X-selecting circuit for selecting two sets of electrodes as a positive terminal and a negative terminal from the X-electrodes; a Y-selecting circuit for selecting two sets of electrodes as a positive terminal and a negative terminal from the Y-electrodes; a driving signal generating circuit for generating signals shifted in phase from each other by 180° as a positive signal and a negative signal; a differential amplifier for amplifying a difference between signals occurring in the positive terminal and the negative terminal selected by one, or respectively by each, of the X-selecting circuit and the Y-selecting circuit; a balanced switching circuit for switching connection of the positive terminal and the negative terminal selected by the Y-selecting circuit or the X-selecting circuit to the driving signal generating circuit or to the differential amplifier at a time of touch detection or at a time of stylus detection; and a stylus for radiating an alternating-current electric field from an electrode at its tip portion.

When the position detecting device operates for touch detection, the positive signal and the negative signal from the driving signal generating circuit are supplied respectively to the positive terminal and the negative terminal of the Y-selecting circuit or the X-selecting circuit, and the differential amplifier is connected to the positive terminal and the negative terminal of the X-selecting circuit or the Y-selecting circuit. The differential amplifier amplifies a composition of signals induced by capacitive coupling at four points of intersection formed by the two sets of X-electrodes selected by the X-selecting circuit and the two sets of Y-electrodes selected by the Y-selecting circuit. At this time, when no finger is touching a position in the vicinity of any of the four points of intersection, the signals are cancelled out, and practically no signal is generated from the differential amplifier. In addition, even when there is external noise caused by the display device or the like, the external noise is cancelled out. At this time, when a finger touches a position in the vicinity of one of the four points of intersection, the finger absorbs an electric field from the driving electrode in the vicinity of the point of intersection, so that the level of the signal induced in the receiving electrode intersecting the driving electrode is decreased. As a result, the signals input to the differential amplifier become unbalanced. Thus a signal is generated from the differential amplifier.

When the position detecting device operates for stylus detection, the positive terminal and the negative terminal of one or respectively each of the X-selecting circuit and the Y-selecting circuit are connected to the differential amplifier to detect a signal from the stylus. The differential amplifier amplifies a difference between signals induced in the two sets of electrodes selected as the positive terminal and the negative terminal. At this time, when the stylus is not present in the vicinity of the two selected sets of electrodes, external noise from the display device or the like is cancelled out, and no signal is generated from the differential amplifier. When the stylus has approached the vicinity of one of the two selected sets of electrodes, a signal from the stylus is induced in the electrode that the stylus has approached. Thus a signal is output from the differential amplifier.

In another form, the present invention proposes the transparent position detecting device in which output of the differential amplifier is connected to a band-pass filter circuit, and a center frequency of the band-pass filter circuit is made to coincide with a frequency of the signals from the driving signal generating circuit at the time of the touch detection and is made to coincide with a frequency of the electric field radiated from the stylus at the time of the stylus detection.

In yet another form, the present invention proposes the transparent position detecting device in which the stylus includes a pen pressure detecting circuit for detecting pen pressure and digitizing the pen pressure, and an ASK modulation circuit for changing an alternating-current signal applied to the electrode in time series by turning on or off the alternating-current signal on a basis of digital information output by the pen pressure detecting circuit.

In yet another form, the present invention proposes the transparent position detecting device in which selection of the electrodes by the X-selecting circuit or the Y-selecting circuit is changed in timing synchronized with the refreshing period of the display device.

Effects of the Invention

According to an embodiment of the present invention, a signal is transmitted from the stylus, and a coordinate position is detected by capacitive coupling. It is therefore possible to detect the position of either of the finger and the stylus by the transparent sensor disposed on the display device.

According to an embodiment of the present invention, two sets of receiving electrodes are selected simultaneously, and the differential amplifier is used to detect a difference between signals induced in these electrodes. It is thus possible to accurately detect and input the coordinate position of the finger and the stylus without being affected by noise produced by the display device.

According to an embodiment of the present invention, in touch detection, two sets of electrodes are selected as not only receiving side electrodes but also as driving side electrodes, and two driving signals shifted in phase from each other by 180° are supplied to the driving side electrodes. It is thus possible to detect a touch position stably over the entire surface of a position detecting region without being affected by variations in characteristics of the transparent sensor. It is further possible to provide the transparent position detecting device in large quantities and at a low price without a need to measure and incorporate correction data for each device.

According to another form of the present invention, the information on the pen pressure of the stylus is transmitted by ASK modulation. It is thus possible to use a filter circuit having a narrow bandwidth, and detect a coordinate position stably without being affected by noise from the display device.

According to yet another form of the present invention, electrodes of the transparent sensor are selected in synchronism with the refresh signal SYNC of the display device. It is thus possible to detect a coordinate position stably without being affected by noise from the display device.

BRIEF DESCRIPTION OF THE DRAWINGS

FIG. 1 is a diagram showing an example of configuration of a transparent sensor used in an embodiment of a position detecting device according to the present invention;
FIG. 2 is a sectional view of the transparent sensor in the example of FIG. 1;
FIG. 3 is a diagram showing an example of configuration of the embodiment of the position detecting device according to the present invention;
FIG. 4 is a diagram showing an example of a signal transmission path in a conventional example in which there is only one driving signal;
FIG. 5 is a diagram showing an equivalent circuit of the signal transmission path in FIG. 4;
FIG. 6 is a diagram showing an example of a signal transmission path in the embodiment of the position detecting device according to the present invention;
FIG. 7 is a diagram showing an equivalent circuit of the signal transmission path in FIG. 6;
FIG. 8 is a diagram of assistance in explaining a touch position determining method in the embodiment of the position detecting device according to the present invention;
FIG. 9 is a diagram showing an internal configuration of a selecting circuit in the embodiment of the position detecting device according to the present invention;
FIG. 10 is a diagram of assistance in explaining X partial scanning operation in touch detection in the embodiment of the position detecting device according to the present invention;

FIG. 11 is a diagram showing a signal level distribution in the X partial scanning operation at the time of the touch detection in the example of FIG. 10;

FIG. 12 is a diagram of assistance in explaining Y partial scanning operation in touch detection in the embodiment of the position detecting device according to the present invention;

FIG. 13 is a diagram showing a signal level distribution in the Y partial scanning operation at the time of the touch detection in the example of FIG. 12;

FIG. 14 is a diagram showing an example of internal structure of a stylus in the embodiment of the position detecting device according to the present invention;

FIG. 15 is a diagram of assistance in explaining X partial scanning operation in stylus detection in the embodiment of the position detecting device according to the present invention;

FIG. 16 is a diagram of assistance in explaining Y partial scanning operation in stylus detection in the embodiment of the position detecting device according to the present invention;

FIG. 17 is a diagram showing an example of a circuit of the stylus in the embodiment of the position detecting device according to the present invention;

FIG. 18 is a chart of signal waveforms in the example of the circuit in FIG. 17;

FIG. 19 is a diagram showing an example of configuration of a band-pass filter circuit used in the embodiment of the position detecting device according to the present invention; and

FIG. 20 is a chart of signal waveforms in the example of the circuit in FIG. 19.

## DETAILED DESCRIPTION

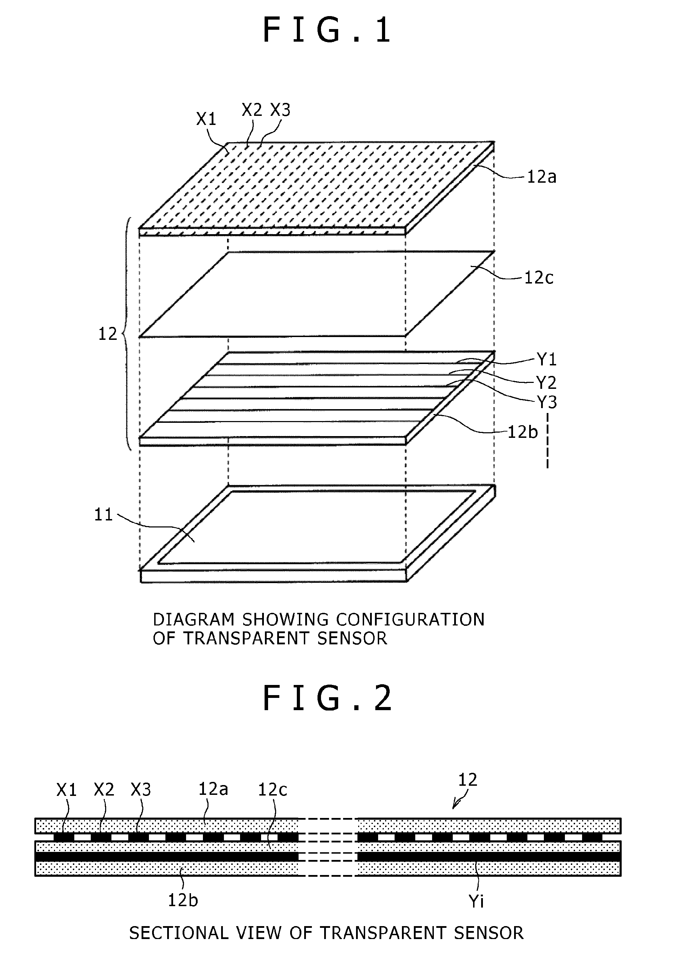

FIG. 1 is a diagram showing a configuration of a transparent sensor combined integrally with a display section in an embodiment of a position detecting device according to the present invention.

In FIG. 1, a reference numeral 11 denotes an LCD (Liquid Crystal Display) panel. A reference numeral 12 denotes the transparent sensor having electrodes formed by ITO (Indium Tin Oxide) (which electrodes will hereinafter be referred to as ITO electrodes). A reference 12a denotes a transparent glass formed by arranging a plurality of lines of ITO electrodes in an X-direction (which glass will hereinafter be referred to as an ITO glass). A reference 12b denotes an ITO glass formed by arranging a plurality of lines of ITO electrodes in a Y-direction orthogonal to the X-direction. A reference 12c denotes a PET (polyethylene terephthalate) film of a uniform thickness. The transparent sensor 12 is produced by opposing the respective ITO surfaces of the transparent glass 12a and the transparent glass 12b to each other and bonding the transparent glass 12a and the transparent glass 12b to each other with the PET film 12c interposed between the transparent glass 12a and the transparent glass 12b. The transparent sensor 12 is disposed so as to be superposed on the LCD panel 11 such that a position detecting region of the transparent sensor 12 exactly coincides with a display region of the LCD panel 11. Incidentally, the electrodes X1, X2, X3, ... arranged in the X-direction on the transparent glass 12a (which electrodes will hereinafter be referred to as X-electrodes) and the electrodes Y1, Y2, Y3, ... arranged in the Y-direction on the transparent glass 12b (which electrodes will hereinafter be referred to as Y-electrodes) are connected by ACF (Anisotropic Conductive Film) connection to a printed board not shown in the figure via a flexible board not shown in the figure. FIG. 2 is a sectional view of the transparent sensor 12 sectioned along a Y-electrode Yi.

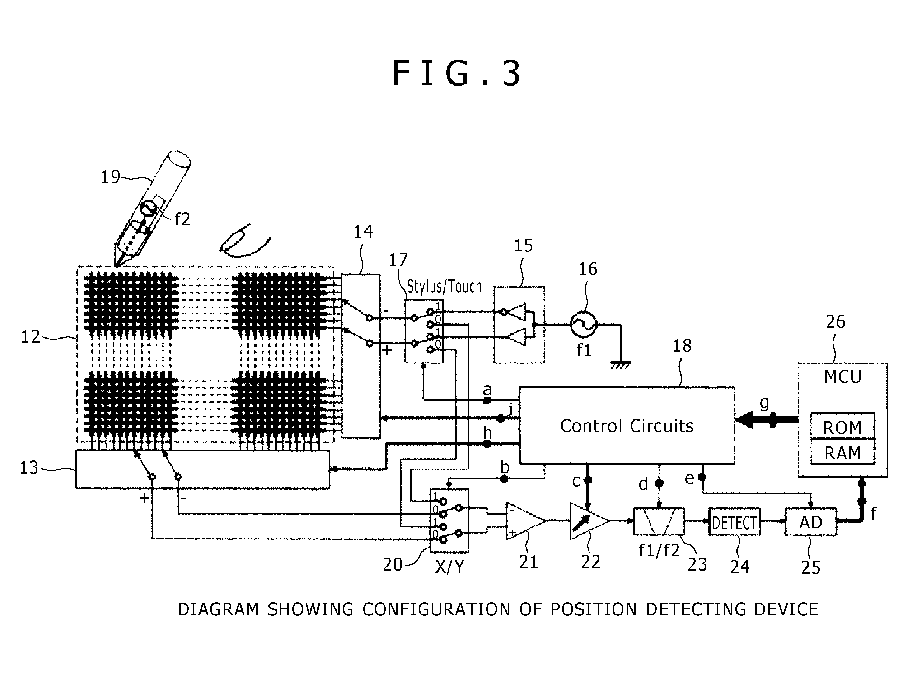

FIG. 3 is a block diagram of the embodiment of the position detecting device according to the present invention. In FIG. 3, a reference numeral 12 denotes the transparent sensor. A reference numeral 13 denotes an X-selecting circuit that is connected to the X-electrodes of the transparent sensor 12 and which selects two sets of electrodes as a positive terminal and a negative terminal from among the X-electrodes X1, X2, X3, .... A reference numeral 14 denotes a Y-selecting circuit that is connected to the Y-electrodes of the transparent sensor 12 and which selects two sets of electrodes as a positive terminal and a negative terminal from among the Y-electrodes Y1, Y2, Y3, .... In the present embodiment, description will be made supposing that there are 40 X-electrodes (X1 to X40) and 30 Y-electrodes (Y1 to Y30).

A reference numeral 15 denotes a driving signal generating circuit for supplying a driving signal to the Y-electrodes at a time of touch detection. The driving signal generating circuit 15 outputs two driving signals shifted in phase from each other by 180° by passing a signal from an oscillator 16 oscillating at a frequency f1 through an inverting amplifier and a non-inverting amplifier. A reference numeral 17 denotes a switching circuit, which switches connection of the positive terminal and the negative terminal selected by the Y-selecting circuit 14 to the output of the driving signal generating circuit 15 or the side of a differential amplifier circuit 21 to be described later. Specifically, when the present device is operated for touch detection, a control circuit 18 sets a control signal a supplied to the switching circuit 17 to a high level "1," so that the switching circuit 17 selects the output side of the driving signal generating circuit 15. When the present device is operated for stylus detection, the control circuit 18 sets the control signal a to a low level "0," so that the switching circuit 17 selects the side of the differential amplifier circuit 21.

A reference numeral 19 denotes a stylus, in which an output voltage from an oscillator having a frequency f2 is supplied between an electrode at a tip portion and a peripheral electrode surrounding the electrode at the tip portion.

A reference numeral 20 denotes a switching circuit, which selects either the positive terminal and the negative terminal selected by the X-selecting circuit 13 or the positive terminal and the negative terminal selected by the Y-selecting circuit 14 via the switching circuit 17, and connects the selected terminals to the differential amplifier circuit 21. Specifically, when the present device is operated for touch detection, the control circuit 18 sets a control signal b supplied to the switching circuit 20 to a low level "0," so that the switching circuit 20 selects the side of the X-selecting circuit 13. In addition, when the present device is operated for stylus detection, and obtains the X-axis coordinate of the stylus, the control circuit 18 sets the control signal b to the low level "0," so that the switching circuit 20 selects the side of the X-selecting circuit 13. In addition, when the present device is operated for stylus detection, and obtains the Y-axis coordinate of the stylus, the control circuit 18 sets the control signal b to a high level "1," so that the switching circuit 20 selects the side of the Y-selecting circuit 14.

The output of the differential amplifier circuit 21 is connected to a gain control circuit 22, and is set to be an output signal having an appropriate level according to a control signal c from the control circuit 18 in the gain control circuit 22.

A reference numeral 23 denotes a band-pass filter circuit having a predetermined bandwidth centered at the frequency f1 or the frequency f2. The center frequency of the bandwidth of the band-pass filter circuit 23 is changed according to a control signal d from the control circuit 18. The center frequency is set at the frequency f1 when the present device is operated for touch detection, and the center frequency is changed to be the frequency f2 when the present device is operated for stylus detection.

The output signal of the band-pass filter circuit 23 is detected by a detecting circuit 24, and thereafter supplied to an AD converting circuit 25 to be converted into a digital value by the AD converting circuit 25 on the basis of a control signal e from the control circuit 18. The digital data f from the AD converting circuit 25 is read and processed by a microprocessor 26.

The control circuit 18 supplies a control signal h to the X-selecting circuit 13, whereby the X-selecting circuit 13 selects two sets of X-electrodes as a positive terminal and a negative terminal. The control circuit 18 also supplies a control signal j to the Y-selecting circuit 14, whereby the Y-selecting circuit 14 selects two sets of Y-electrodes as a positive terminal and a negative terminal.

A reference numeral 26 denotes the microprocessor (MCU), which internally includes a ROM and a RAM, and operates according to a program stored in the ROM.

The microprocessor 26 outputs a control signal g on the basis of the program to control the control circuit 18 such that the control circuit 18 outputs the control signals a to f and h and j in predetermined timing.

Description will be made of operation when the thus configured position detecting device according to the present embodiment performs touch detection. As described above, at a time of touch detection, the switching circuit 17 is connected to the side of the driving signal generating circuit 15, so that two driving signals shifted in phase from each other by 180° are supplied respectively to the two Y-electrodes selected by the Y-selecting circuit 14. At this time, suppose that the two Y-electrodes selected by the Y-selecting circuit 14 are selected so as to be separated from each other at an interval of a certain number of lines, and the interval is desirably a distance somewhat longer than a maximum diameter of a contact surface of a finger. Supplying two driving signals shifted in phase from each other by 180° to two transparent electrodes separated from each other by a certain distance in this manner is one of features of the present invention.

Voltages induced in the two X-electrodes selected by the X-selecting circuit 13 are supplied to the differential amplifier circuit 21 via the switching circuit 20. The differential amplifier circuit 21 amplifies and outputs a difference between the voltages induced in the two selected X-electrodes. Noise caused by the LCD panel L1 is generally induced in the two X-electrodes equally. Therefore, this noise component is cancelled out and hardly appears in the output of the differential amplifier circuit 21. Suppose that the two X-electrodes selected by the X-selecting circuit 13 at this time are selected so as to be separated from each other at an interval of a certain number of lines, and the interval is desirably a distance somewhat longer than a maximum diameter of a contact surface of a finger.

Not only by making the X-electrodes as a receiving side perform differential operation but also by driving the Y-electrodes as a driving side with two signals inverted in phase with respect to each other in touch detecting operation as described above, a great contribution is made to manufacturing the device stably and inexpensively. While the reasons therefor will be described below, first, description will be made of problems in a case of one driving signal.

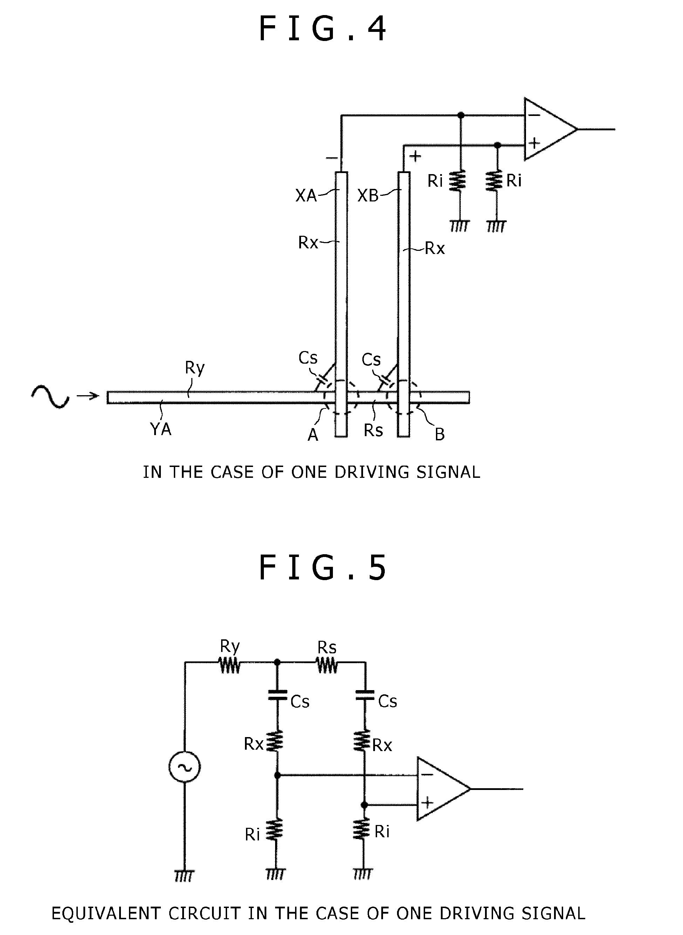

A signal transmission path in the case of one driving signal can be shown as in FIG. 4. As shown in FIG. 4, one Y-electrode YA is coupled to two X-electrodes XA and XB at points of intersection A and B with capacitances Cs, respectively. The capacitances Cs at these points of intersection A and B when no finger is placed are equal to each other.

Rx denotes a resistance value of the X-electrodes XA and XB from the points of intersection A and B to selected ends. Ry denotes a resistance value of the Y-electrode YA from the point of intersection A to a driving end. Rs denotes a resistance value of the Y-electrode YA between the points of intersection A and B. Ri denotes a resistance value of the input terminals of the differential amplifier circuit. FIG. 5 is a circuit diagram showing the signal transmission path as an equivalent circuit. When consideration is given to a case where no finger is placed in the vicinity of any of the points of intersection A and B in FIG. 5, an output signal hardly appears in the differential amplifier circuit when the resistance value Ry is sufficiently larger than the resistance value Rs or when the resistance value Rx is sufficiently larger than the resistance value Rs. However, when the resistance value Rs becomes nonnegligible as compared with the magnitudes of the resistance values Rx and Ry, the component of the driving signal is amplified and appears as an offset output in the differential amplifier circuit. It can be understood from FIG. 5 that the level of the offset signal changes greatly depending on positions selected as the points of intersection A and B of the X-electrodes XA and XB and the Y-electrode YA.

When a region near the driving end or the receiving end is selected as a point of intersection, an offset signal larger than a signal change caused by a finger is generated, and therefore a process of obtaining the offset level over the entire surface of the detecting region in advance becomes essential. To further complicate the problem, this offset level is greatly affected by variations in a manufacturing process for the transparent sensor. When resistance distributions of the X-electrodes and the Y-electrodes are not uniform, or intervals between the X-electrodes and the Y-electrodes at a time of lamination are not uniform, offset levels depending on positions within the detecting region have a distribution differing for each individual device. This necessitates a process of measuring a distribution of offset levels in each device and capturing the distribution as correction data in the manufacturing process.

Reasons that the present invention can reduce the offset signal as described above will be described in the following.

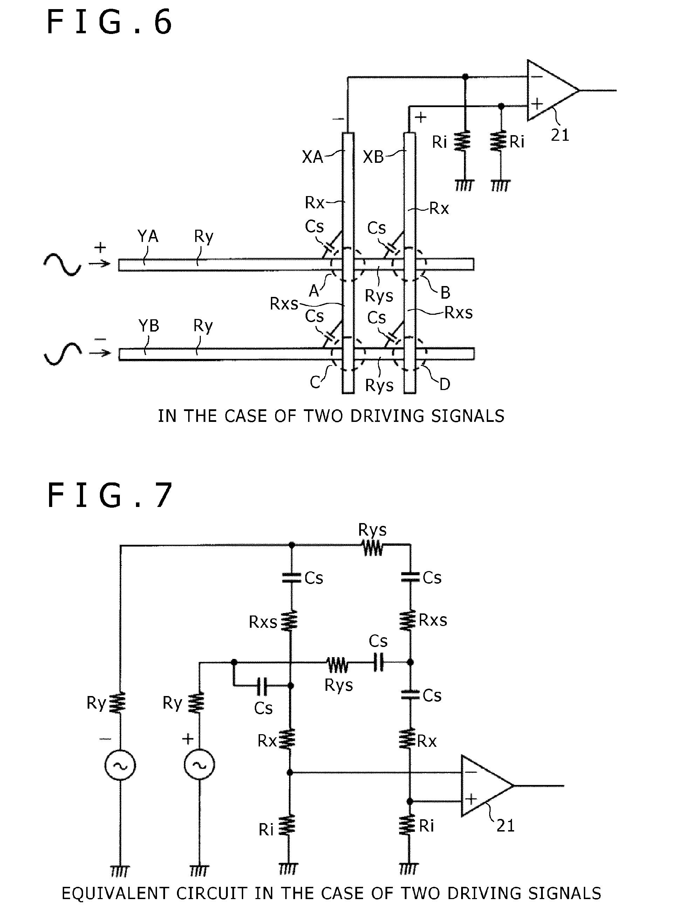

A signal transmission path of FIG. 3 can be shown as in FIG. 6. At points of intersection A, B, C, and D of two Y-electrodes YA and YB and two X-electrodes XA and XB, the X-electrodes XA and XB are coupled to the Y-electrodes YA and YB with capacitances Cs. The capacitances Cs at these points of intersection A, B, C, and D when no finger is placed are equal to each other.

Rx denotes a resistance value from the points of intersection A and B of the X-electrodes XA and XB and the Y-electrode YA to selected ends. Ry denotes a resistance value from the points of intersection A and C of the Y-electrodes YA and YB and the X-electrode XA to driving ends. Rxs denotes a resistance value between the points of intersection A and C of the X-electrode XA and the Y-electrodes YA and YB and between the points of intersection B and D of the X-electrode XB and the Y-electrodes YA and YB. Rys denotes a resistance value between the points of intersection A and B of the Y-electrode YA and the X-electrodes XA and XB and between the points of intersection C and D of the Y-electrode YB and the X-electrodes XA and XB. Ri denotes a resistance value of the input terminals of the differential amplifier circuit 21.

FIG. 7 is a circuit diagram showing the transmission path of FIG. 6 as an equivalent circuit. It should be understood when FIG. 7 is expressed by an equation that an output offset level in response to driving voltages is very low as compared with the case of FIG. 5. However, the equation is complex, and therefore brief description will be made with reference to FIG. 6.

In FIG. 6, the point of intersection A is a point of intersection of the positive side driving line and the negative side receiving line of the differential amplifier circuit 21. The capacitance of the point of intersection A therefore acts to swing the output of the differential amplifier circuit 21 to the negative side. The point of intersection C is a point of intersection of the negative side driving line and the negative side receiving line of the differential amplifier circuit 21. The capacitance of the point of intersection C therefore acts to swing the output to the positive side. The point of intersection B is a point of intersection of the positive side driving line and the positive side receiving line of the differential amplifier circuit 21. The capacitance of the point of intersection B therefore acts to swing the output to the positive side. The point of intersection D is a point of intersection of the negative side driving line and the positive side receiving line of the differential amplifier circuit 21. The capacitance of the point of intersection D therefore acts to swing the output to the negative side. A composition of the actions by the capacitances of the respective points of intersection A, B, C, and D appears in the output of the differential amplifier circuit 21.

Here, directing attention to the magnitude of electromotive forces induced in the input terminals of the differential amplifier circuit 21 by the capacitances of the respective points of intersection A, B, C, and D, a largest electromotive force is induced by the capacitance of the point of intersection A, a smallest electromotive force is induced by the capacitance of the point of intersection D, and an electromotive force intermediate between the largest electromotive force and the smallest electromotive force is induced by the capacitances of the point of intersection B and the point of intersection C. As described above, the capacitance of the point of intersection A and the capacitance of the point of intersection D both act to swing the output to the negative side. It can therefore be understood that the largeness of the electromotive force induced by the point of intersection A which electromotive force is larger than the electromotive forces induced by the point of intersection B and the point of intersection C and the smallness of the electromotive force induced by the point of intersection D which electromotive force is smaller than the electromotive forces induced by the point of intersection B and the point of intersection C cancel each other out exactly.

Thus, the embodiment of the present invention can cancel out noise from the LCD panel 11 and perform touch detection with small offset signals in the entire surface of the position detecting region. Therefore, a touch position can be detected stably without being affected by variations in characteristics in the manufacturing process for the transparent sensor, and correction data for each individual position detecting device does not needs to be incorporated.

Description will next be made of a method for identifying a position at which a finger is placed among the points of intersection A, B, C, and D in FIG. 6 in a case where a signal having a certain level or higher is detected from the differential amplifier circuit 21 as a result of electrode selection as shown in FIG. 6 being made in the present embodiment.

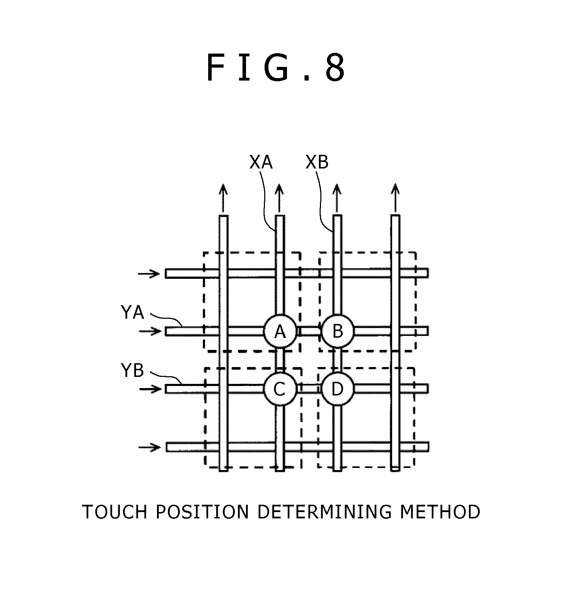

FIG. 8 represents a surest method therefor. Selection of electrodes including only one of the points of intersection A, B, C, and D when a signal is detected in FIG. 6 is made in four ways as indicated by square dotted lines in FIG. 8. A finger is detected touching the included point of intersection when these four kinds of settings are made and the signal is detected. This method is an example, and another method may be used to determine which of the points of intersection A, B, C, and D is touched by the finger.

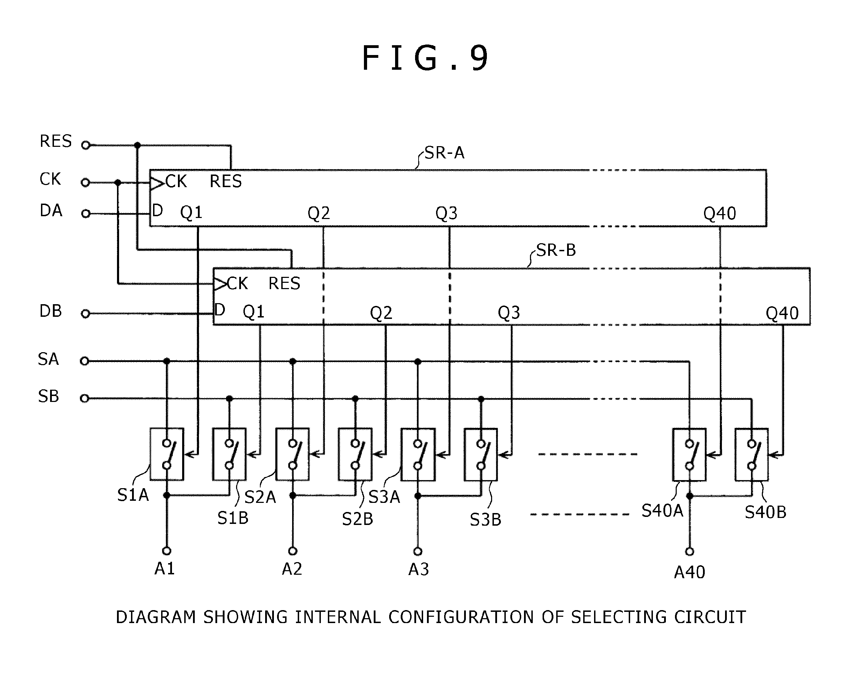

When operation is performed for all of the electrodes in FIG. 3 by the method represented in FIG. 6 and FIG. 8, a point of intersection of electrodes on the transparent sensor 12 around which point a position is touched by the finger can be determined. In order to detect the touching of the finger quickly, the above-described electrode selecting method is desirably carried out in a few divided steps. In a state in which the finger is yet to be detected, it is desirable to detect a large region en bloc by selecting a plurality of adjacent electrodes simultaneously rather than selecting one line as each of a positive terminal and a negative terminal by the X-selecting circuit 13 and the Y-selecting circuit 14. When a signal is detected in this case, the region can be narrowed down by gradually decreasing the number of selected electrodes. A circuit as shown in FIG. 9 can be used as a configuration of a selecting circuit for making such selection.

FIG. 9 shows an example of 40 input terminals. Analog switches S1A to S40A and S1B to S40B are provided which connect each of the input terminals A1 to A40 to a positive side selecting terminal SA and a negative side selecting terminal SB. In addition, 40-bit shift registers SR-A and SR-B are provided which shift respective values set from a positive side data terminal DA and a negative side data terminal DB according to a clock CK. The respective outputs of the shift registers SR-A and SR-B are connected as control signals for the analog switches S1A to S40A and S1B to S40B. The 40 input terminals A1 to A40 can be arbitrarily set to be connected to or disconnected from the two selecting terminals SA and SB by repeating an operation of setting values to the two data terminals DA and DB and supplying the clock CK.

The arrangement pitch of the X-electrodes X1 to X40 and the Y-electrodes Y1 to Y30 should be determined in consideration of the contact area of a finger and the region of an electric field radiated from the stylus. However, it is not necessarily desirable to arrange the X-electrodes X1 to X40 and the Y-electrodes Y1 to Y30 at a very small pitch in consideration of the cost of the position detecting device and a detection processing time. The arrangement pitch suitable for detection of both of a finger and the stylus is desirably in a range of about 3 mm to 5 mm. However, the resolution of detection of a touch position needs to be higher than the arrangement pitch. Thus, a position between two electrodes needs to be calculated by interpolation on the basis of partial scanning operation to be described later.

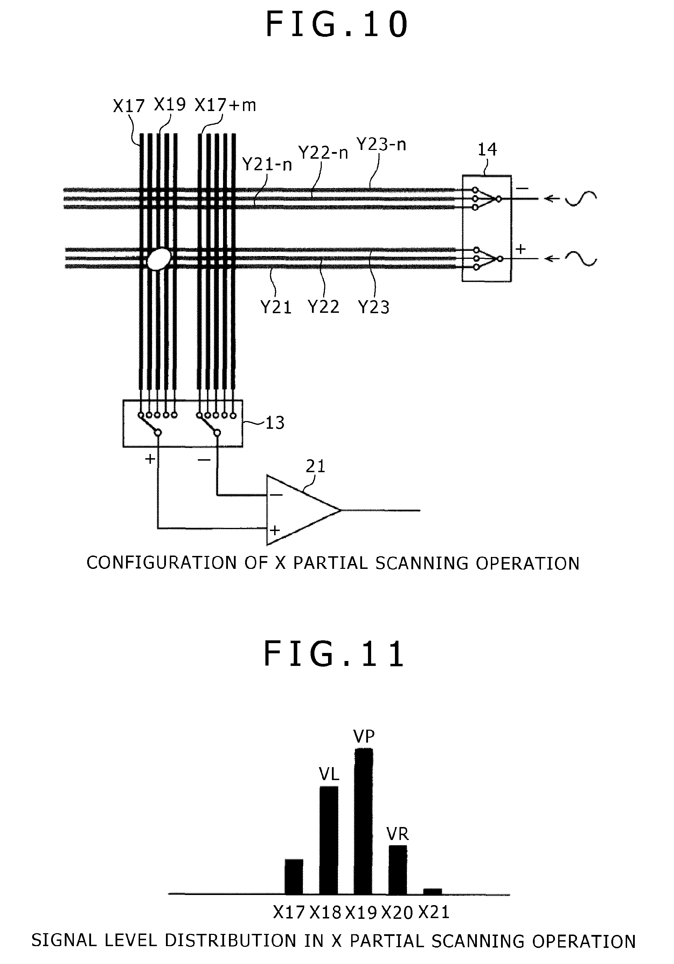

FIG. 10 is a diagram showing selection of electrodes in FIG. 3 in X partial scanning operation for accurately obtaining the X-coordinate value of a position touched by a finger. Suppose in this case that a finger is known to be touching a position around a point of intersection of an X-electrode X19 and a Y-electrode Y22 in advance in the above-described step. The microprocessor 26 sends out a control signal via the control circuit 18 so as to simultaneously connect the positive terminal of the Y-selecting circuit 14 to three Y-electrodes Y21 to Y23 and simultaneously connect the negative terminal of the Y-selecting circuit 14 to three Y-electrodes Y21-n to Y23-n separated from the Y-electrode Y22 by a certain number n of lines.

The microprocessor 26 also sends out a control signal via the control circuit 18 so as to connect the positive terminal of the X-selecting circuit 13 to an X-electrode X17 and connect the negative terminal of the X-selecting circuit 13 to an X-electrodes X17+m separated from the X-electrode X17 by a certain number m of lines. A signal output to the differential amplifier circuit 21 in this state is converted into a digital value by the AD converting circuit 25, and is read by the microprocessor 26. The microprocessor 26 next sends out a control signal via the control circuit 18 so as to connect the positive terminal of the X-selecting circuit 13 to an X-electrode X18 and connect the negative terminal of the X-selecting circuit 13 to an X-electrodes X18+m separated from the X-electrode X18 by a certain number m of lines. Data output to the differential amplifier circuit 21 and subjected to AD conversion in this state is read by the microprocessor 26. Similarly, the microprocessor 26 sequentially obtains the levels of signals output to the differential amplifier circuit 21 when the positive terminal of the X-selecting circuit 13 is connected to X-electrodes X19, X20, and X21.

FIG. 11 shows an example of a signal level distribution when the X-electrodes X17 to X21 are selected sequentially. Letting VP be a highest level detected at this time, and letting VL and VR be levels when electrodes adjacent on both sides to the electrode where the peak level is detected are selected, the X-coordinate of the finger can be calculated by the following equation.

$$X = Px + (DX/2)*(VR - VL)/(2*VP - VR - VL)... \qquad \text{(Equation 1)}$$

In (Equation 1), Px denotes the coordinate of the electrode where the peak level is detected (X-electrode X19 in this case), and DX denotes arrangement intervals of the X-electrodes.

In the above-described X partial scanning operation, the electrodes on which the finger is placed on the X-side and the Y-side are both selected to be on the positive side. However, without being limited to this, the electrodes on which the finger is placed on the X-side and the Y-side are both selected to be on the negative side, or the electrodes on which the finger is placed on the X-side may be on the positive side and the electrodes on which the finger is placed on the Y-side may be on the negative side, or vice versa.

In addition, three electrodes adjacent to each other are simultaneously selected as Y-side driving electrodes in order to be able to drive the finger contact surface surely even when the finger moves. The number of electrodes may be larger than three. However, the number of electrodes selected as the positive side and the number of electrodes selected as the negative side are desirably the same.

After the X-coordinate of the indicated position is obtained on the basis of the above-described X partial scanning operation, Y partial scanning operation for obtaining the Y-coordinate of the indicated position is performed next.

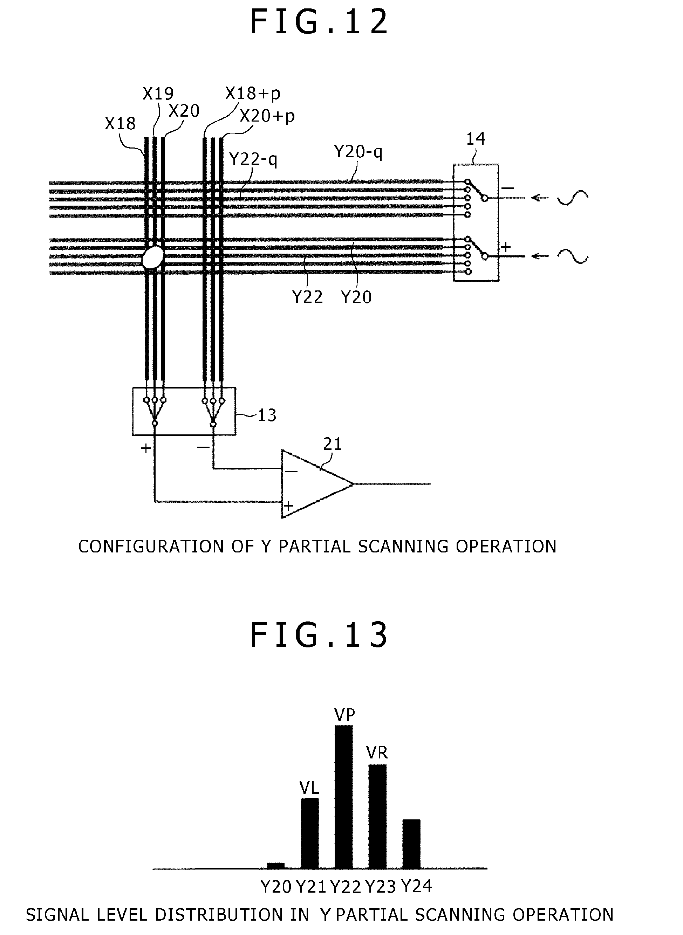

FIG. 12 is a diagram showing selection of electrodes in FIG. 3 in Y partial scanning operation for accurately obtaining the Y-coordinate value of the position touched by the finger. The microprocessor 26 sends out a control signal via the control circuit 18 so as to simultaneously connect the positive terminal of the X-selecting circuit 13 to three X-electrodes X18 to X20 and simultaneously connect the negative terminal of the X-selecting circuit 13 to three X-electrodes X18+p to X20+p separated from the X-electrode X18 by a certain number p of lines.

The microprocessor 26 also sends out a control signal via the control circuit 18 so as to connect the positive terminal of the Y-selecting circuit 14 to a Y-electrode Y20 and connect the negative terminal of the Y-selecting circuit 14 to a Y-electrode Y20-q separated from the Y-electrode Y20 by a certain number q of lines. A signal output to the differential amplifier circuit 21 in this state is converted into a digital value by the AD converting circuit 25, and is read by the microprocessor 26. The microprocessor 26 next sends out a control signal via the control circuit 18 so as to connect the positive terminal of the Y-selecting circuit 14 to a Y-electrode Y21 and connect the negative terminal of the Y-selecting circuit 14 to a Y-electrode Y21-q separated from the Y-electrode Y21 by a certain number q of lines. Data output to the differential amplifier circuit 21 and subjected to AD conversion in this state is read by the microprocessor 26. Similarly, the microprocessor 26 sequentially obtains the levels of signals output to the differential amplifier circuit 21 when the positive terminal of the Y-selecting circuit 14 is connected to Y-electrodes Y22, Y23, and Y24.

FIG. 13 shows an example of a signal level distribution when the Y-electrodes Y20 to Y24 are selected sequentially. Letting VP be a highest level detected at this time, and letting VL and VR be levels when electrodes adjacent on both sides to the electrode where the peak level is detected are selected, the Y-coordinate of the finger can be calculated by the following equation.

$$Y = Py + (DY/2)*(VR - VL)/(2*VP - VR - VL)... \qquad \text{(Equation 2)}$$

In the above equation, Py denotes the coordinate of the electrode where the peak level is detected (Y-electrode Y22 in this case), and DY denotes arrangement intervals of the Y-electrodes.

In the above-described Y partial scanning operation, the electrodes on which the finger is placed on the X-side and the Y-side are both selected to be on the positive side. However, as in the X partial scanning operation, the Y partial scanning operation is not limited to this.

In addition, three electrodes adjacent to each other are simultaneously selected as X-side driving electrodes in order to be able to select electrodes under the finger contact surface surely even when the finger moves. The number of electrodes may be larger than three. However, the number of electrodes selected as the positive side and the number of electrodes selected as the negative side are desirably the same.

The above-described calculation equations, that is, (Equation 1) and (Equation 2) are an example, and are not necessarily an optimum method. The optimum calculating method changes according to the width and pitch of the electrodes, the contact area of a finger, and the like.

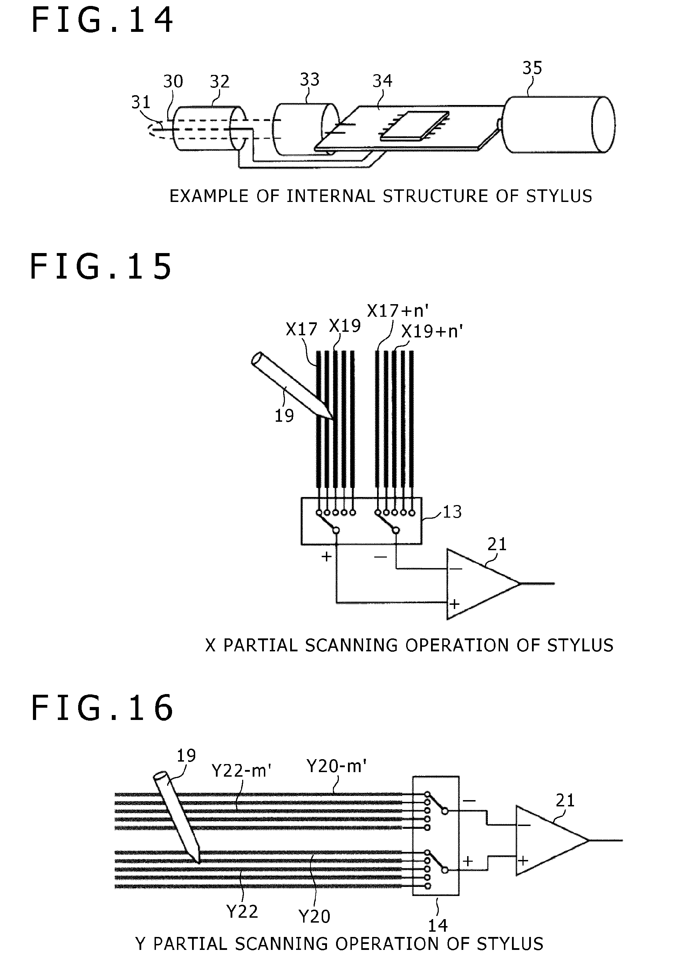

FIG. 14 shows an example of an internal structure of the stylus 19 used in the present embodiment. In FIG. 14, a core 30 is provided as a tip portion, and an electrode 31 is embedded within the core 30. A shield electrode 32 is provided on an outer circumference of the core 30, excluding the tip portion of the core 30, so as to surround the core 30. The shield electrode 32 is connected to a part whose potential is most stable in the circuit, for example a negative terminal (GND) of a battery 35. This shield electrode 32 has an effect of preventing a detection coordinate value from being shifted even when the stylus is placed on the transparent sensor 12 in an inclined state.

A reference numeral 33 denotes a variable capacitance capacitor which is physically coupled to the core 30, and which is changed in capacitance by pen pressure applied via the core 30. A reference numeral 34 denotes a printed board. A reference numeral 35 denotes the battery. The printed board 34 is provided with an oscillating circuit that oscillates at the frequency f2. The oscillation output of the oscillating circuit is supplied to the electrode 31. The pen pressure applied to the variable capacitance capacitor 33 is converted into a binary code by operation to be described later, and output as an ASK modulated signal by controlling the oscillating circuit.

Description in the following will be made of a method for detecting the coordinate position of the thus formed stylus 19. At a time of detection of the stylus, the switching circuit 17 in FIG. 3 is connected to the side of the differential amplifier circuit 21 (input terminal of the switching circuit 20). When the position in the X-direction of the stylus is obtained, the control signal b from the control circuit 18 to the switching circuit 20 is set to a low level "0" to connect the side of the X-selecting circuit 13 to the differential amplifier circuit 21. When the position in the Y-direction of the stylus is obtained, the control signal b from the control circuit 18 to the switching circuit 20 is set to a high level "1" to connect the side of the Y-selecting circuit 14 to the differential amplifier circuit 21.

When the position detecting device according to the present embodiment detects the X-coordinate of the stylus 19, X-electrodes connected by the X-selecting circuit 13 as a positive terminal and a negative terminal are selected so as to be separated from each other at an interval of a certain number of lines according to the control signal h from the control circuit 18. The two X-electrodes selected at this time are desirably separated from each other at an interval of lines which interval is somewhat wider than a region of radiation of an electric field radiated from the electrode 31 of the stylus 19. No signal is output to the differential amplifier circuit 21 when the stylus 19 is not present in the vicinity of any of the two selected X-electrodes. When the stylus 19 is placed in the vicinity of one of the two selected X-electrodes, a signal corresponding to a distance between the X-electrode and the tip portion of the stylus 19 is output as output of the differential amplifier circuit 21. A signal from the stylus 19 can be detected when the level of the output signal of the differential amplifier circuit 21 is detected while selection of X-electrodes by the X-selecting circuit 13 is sequentially updated.

Supposing that a strongest signal is detected in a particular state of selection of the X-selecting circuit 13, it is necessary to determine on which of the X-electrode selected as the positive terminal and the X-electrode selected as the negative terminal the stylus 19 is placed. This determination can be made easily when a signal is detected with another selection made which selection includes only one of the X-electrode selected as the positive terminal and the X-electrode selected as the negative terminal in the particular state.

For example, supposing that a strongest signal is detected when the X-electrode X19 is selected as the positive terminal and the X-electrode X26 is selected as the negative terminal in the particular state, the stylus 19 is known to be placed in the vicinity of the X-electrode X19 or the X-electrode X26.

Accordingly, in order to determine on which of the electrodes the stylus 19 is placed, the X-selecting circuit 13 is controlled so as to select the X-electrode X26 as the positive terminal and the X-electrode X35 separated in an opposite direction from the X-electrode X19 selected in the particular state as the negative terminal. When the differential amplifier circuit 21 detects a signal in this state, it is determined that the stylus 19 is present in the vicinity of the commonly selected X-electrode X26. When the differential amplifier circuit 21 does not detect a signal in this state, it is determined that the stylus 19 is present in the vicinity of the X-electrode X19.

When the Y-coordinate of the stylus 19 is detected, Y-electrodes connected by the Y-selecting circuit 14 as a positive terminal and a negative terminal are selected so as to be separated from each other at an interval of a certain number of lines according to the control signal j from the control circuit 18. The two Y-electrodes selected at this time are desirably separated from each other at an interval of lines which interval is somewhat wider than a region of radiation of an electric field radiated from the electrode 31 of the stylus 19. The Y-electrode closest to a position where the stylus 19 is placed can be determined by an exactly similar process to that described above.

Also in the detection of the X-coordinate of the stylus 19 and the detection of the Y-coordinate of the stylus 19 according to the present embodiment, a difference between signals induced in two electrodes selected as a positive terminal and a negative terminal is detected as in touch detection. Thus, external noise caused by the display device and the like is cancelled out, and the detection of the X-coordinate of the stylus 19 and the detection of the Y-coordinate of the stylus 19 according to the present embodiment are not affected by the external noise.

By the above-described operation, it is possible to determine in the vicinity of which X-electrode and Y-electrode the stylus 19 is present. X partial scanning operation and Y partial scanning operation for obtaining the position indicated by the stylus 19 in more detail are performed next.

FIG. 15 is a diagram showing selection of electrodes in FIG. 3 in the X partial scanning operation for accurately obtaining the X-coordinate value of the stylus 19. Suppose in this case that the stylus 19 is known to be placed around a point of intersection of an X-electrode X19 and a Y-electrode Y22 in advance in the above-described step.

The microprocessor 26 sends out a control signal via the control circuit 18 so as to connect the positive terminal of the X-selecting circuit 13 to an X-electrode X17 and connect the negative terminal of the X-selecting circuit 13 to an X-electrodes X17+n' separated from the X-electrode X17 by a certain number n' of lines. A signal output to the differential amplifier circuit 21 in this state is converted into a digital value by the AD converting circuit 25, and is read by the microprocessor 26. The microprocessor 26 next sends out a control signal via the control circuit 18 so as to connect the positive terminal of the X-selecting circuit 13 to an X-electrode X18 and connect the negative terminal of the X-selecting circuit 13 to an X-electrodes X18+n' separated from the X-electrode X18 by a certain number n' of lines. Data output to the differential amplifier circuit 21 and subjected to AD conversion in this state is read by the microprocessor 26. Similarly, the microprocessor 26 sequentially obtains the levels of signals output to the differential amplifier circuit 21 when the positive terminal of the X-selecting circuit 13 is connected to X-electrodes X19, X20, and X21. A signal level distribution when each of the X-electrodes X17 to X21 is selected sequentially at this time is a distribution as shown in FIG. 11 as in the case of touch detection. Letting VP be the highest level, and letting VL and VR be levels when electrodes adjacent on both sides to the electrode where the peak level is detected are selected, the X-coordinate of the stylus 19 can be calculated by using (Equation 1) described above.

In the above-described X partial scanning operation, the X-electrodes on which the stylus is placed are selected to be on the positive side. However, the X-electrodes on which the stylus is placed may be selected to be on the negative side.

FIG. 16 is a diagram showing selection of electrodes in FIG. 3 in the Y partial scanning operation for accurately obtaining the Y-coordinate value of the stylus 19. The microprocessor 26 sends out a control signal via the control circuit 18 so as to connect the positive terminal of the Y-selecting circuit 14 to a Y-electrode Y20 and connect the negative terminal of the Y-selecting circuit 14 to a Y-electrode Y20-m' separated from the Y-electrode Y20 by a certain number m' of lines. A signal output to the differential amplifier circuit 21 in this state is converted into a digital value by the AD converting circuit 25, and is read by the microprocessor 26. The microprocessor 26 next sends out a control signal via the control circuit 18 so as to connect the positive terminal of the Y-selecting circuit 14 to a Y-electrode Y21 and connect the negative terminal of the Y-selecting circuit 14 to a Y-electrode Y21-m' separated from the Y-electrode Y21 by a certain number m' of lines. Data output to the differential amplifier circuit 21 and subjected to AD conversion in this state is read by the microprocessor 26. Similarly, the microprocessor 26 sequentially obtains the levels of signals output to the differential amplifier circuit 21 when the positive terminal of the Y-selecting circuit 14 is connected to Y-electrodes Y22, Y23, and Y24. A signal level distribution when each of the Y-electrodes Y20 to Y24 is selected sequentially at this time is a distribution as shown in FIG. 13 as in the case of touch detection. Letting VP be the highest level, and letting VL and VR be levels when electrodes adjacent on both sides to the electrode where the peak level is detected are selected, the Y-coordinate of the stylus 19 can be calculated by using (Equation 2) described above.

In the above-described Y partial scanning operation, the Y-electrodes on which the stylus is placed are selected to be on the positive side. However, the Y-electrodes on which the stylus is placed may be selected to be on the negative side.

The above-described calculation equations, that is, (Equation 1) and (Equation 2) are an example, and are not necessarily an optimum method. The optimum calculating method changes according to the width and pitch of the electrodes, the shape of the electrodes of the stylus, and the like.

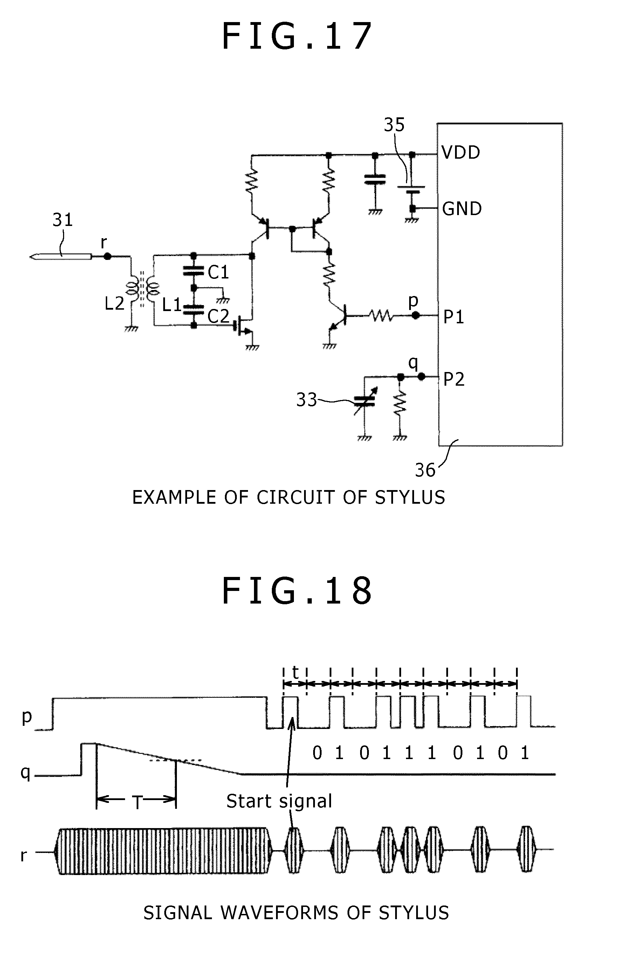

FIG. 17 shows an example of a circuit of the stylus 19. In FIG. 17, the same parts as in FIG. 14 are identified by the same reference numerals. A reference numeral 31 denotes the electrode provided to the tip portion of the stylus 19. A reference numeral 35 denotes the battery. A reference numeral 33 denotes the variable capacitance capacitor that is changed in capacitance by pen pressure. A coil L1 and capacitors C1 and C2 in FIG. 17 form a part of the oscillating circuit that oscillates at the frequency f2. The oscillation output of the oscillating circuit is induced in a coil L2 coupled to the coil L1, and supplied to the electrode 31.

A reference numeral 36 denotes a CPU, which operates according to a predetermined program. A control signal p from an output terminal P1 of the CPU 36 is connected to the above-described oscillating circuit, and controls the oscillation to be in an activated or stopped state. When the control signal p is at a low level "0," the oscillation is stopped. When the control signal p is at a high level "1," the oscillation is performed. The variable capacitance capacitor 33 is connected in parallel with a resistance, and is connected to a terminal P2 of the CPU 36. The operation of the stylus 19 will be described letting q be a signal of the terminal P2 and letting r be a signal supplied to the electrode 31.

FIG. 18 shows the respective waveforms of the signals p, q, and r in FIG. 17. The CPU 36 maintains the state of the high level "1" of the signal p for a certain period to continue the operation of the oscillating circuit. During this period, the coordinate detecting operations shown in FIG. 15 and 16 are performed on the side of the position detecting device.

The CPU 36 also detects pen pressure applied to the variable capacitance capacitor 33 during the continuous transmission period. For this pen pressure detection, the CPU 36 sets the terminal P2 to a high-level output after starting the above-described continuous transmission. Thereby, the signal q is set to a high level, and the variable capacitance capacitor 33 is charged to the voltage of the battery 35. After the charge is completed, the CPU 36 changes the terminal P2 to an input setting, that is, a high-impedance setting. Thereby, a charge charged in the variable capacitance capacitor 33 is discharged by the resistance connected in parallel with the variable capacitance capacitor 33. The voltage of the signal q therefore decreases gradually. When the voltage of the terminal P2 becomes equal to or lower than a predetermined threshold voltage in the CPU 36, an internal logic is set to a low level. The CPU 36 measures, as "T," a time from the switching of the terminal P2 to the input setting to the reaching of the threshold or lower voltage by the voltage of the terminal P2. This time "T" changes according to the capacitance of the variable capacitance capacitor 33, that is, the magnitude of the pen pressure. The CPU 36 therefore obtains the measured time "T" as a 10-bit digital value in a range in which the pen pressure is zero to a maximum.

A short time after an end of the above-described continuous transmission period, the CPU 36 performs ASK modulation by controlling the terminal P1 according to the 10-bit pen pressure data. Specifically, the CPU 36 sets the terminal P1 to a low level when bit data of the digital value of the pen pressure is "0," and the CPU 36 sets the terminal P1 to a high level when bit data of the digital value of the pen pressure is "1." A time t in FIG. 18 is a period of sending out one-bit data. This period is desirably determined in consideration of the characteristics of resonance of the coil L1 in FIG. 17, the characteristics of the band-pass filter circuit 23 in FIG. 3, the sampling period of the AD converting circuit 25 in FIG. 3, and the like. First data (Start signal) in FIG. 18 is always sent out as "1." This is to enable the microprocessor 26 of the position detecting device to predict the timing of subsequent data correctly.

In FIG. 17, the oscillation is performed by resonance of the coil and the capacitors, thus providing high efficiency of use of power supply and producing an effect of lengthening the life of the battery 35. The oscillating circuit may use another method, for example a ceramic resonator, a quartz oscillator, or the like. In addition, while the pen pressure applied to the tip portion of the stylus 19 is detected and transmitted in the present embodiment, only switch information may be transmitted, or other switch information or the like may also be transmitted in addition to pen pressure information.

In the present embodiment, pen pressure data is transmitted as the signal of the stylus 19 by ASK modulation. Thus, a band of frequencies to be used is very narrow, and the bandwidth of the band-pass filter circuit 23 can be narrowed. This produces an effect in that the position detecting device according to the present embodiment is not readily susceptible to noise produced by the display device and the like.

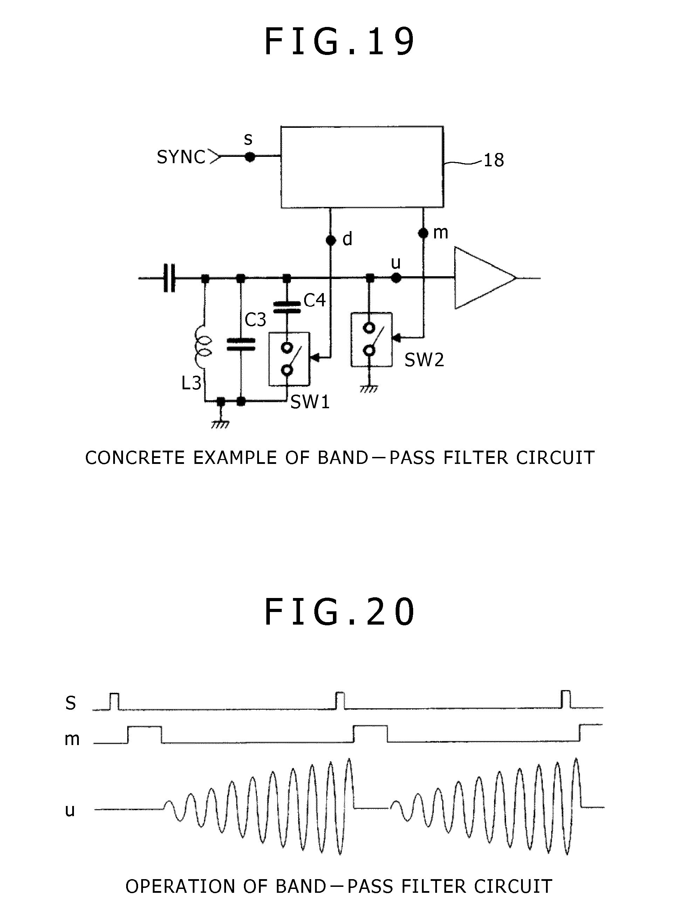

FIG. 19 is a diagram showing a concrete example of the band-pass filter circuit 23. A reference numeral 18 denotes the control circuit shown in FIG. 3. A signal d is the same frequency changing signal as shown in FIG. 3. In the band-pass filter circuit 23 of FIG. 19, the respective values of a coil L3, a capacitor C3, and a capacitor C4 are adjusted such that the resonance frequency of the coil L3 and the capacitor C3 is equal to the signal frequency f2 from the stylus when a switch SW1 is off and such that the resonance frequency of the coil L3, the capacitor C3, and the capacitor C4 is equal to the frequency f1 of the oscillator 16 when the switch SW1 is on. That is, the band-pass filter circuit 23 is used with the switch SW1 set in an off state by the signal d at a time of stylus detection, and with the switch SW1 set in an on state by the signal d at a time of touch detection.

There is a reason for setting the frequency f2 at a time of stylus detection higher than the frequency f1 at a time of touch detection in the present embodiment. A finger touches the transparent sensor 12 with a certain area, whereas the electrode 31 at the tip of the stylus cannot be made very thick. Therefore, to receive signals by the same sensor, the frequency of the signal radiated from the stylus 19 is desirably higher than in the case of touch detection.

In FIG. 19, a signal m is a control signal output from the control circuit 18. This control signal m turns on a switch SW2 to mute the output of the band-pass filter circuit 23. The present embodiment uses the band-pass filter circuit 23 whose band is very narrow due to an LC resonance circuit to improve frequency selectivity for external noise. Thus, even after electrodes are changed by the X-selecting circuit 13 and the Y-selecting circuit 14, an electric oscillation due to an input signal before the change is occurring in the coil L3 and the capacitor C3. The switch SW2 is intended to enable a next signal detection to be performed quickly without waiting for the extinction of the residual oscillation.

FIG. 20 is a diagram showing the operation of the band-pass filter circuit 23 having the configuration shown in FIG. 19. The X-selecting circuit 13 and the Y-selecting circuit 14 desirably change X-electrodes and Y-electrodes at a time of a start (rising from a low level "0" to a high level "1") of the control signal m. The present invention proposes synchronizing the time of the start of the control signal m with a refresh signal SYNC of the display device.

Many display devices such as LCDs and the like radiate strong noise in timing synchronized with the refresh signal SYNC. When a time from the refresh signal SYNC to the time of the start of the control signal m is adjusted so that a period of main noise radiated by the display device coincides exactly with a period in which the control signal m is at a high level "1" and thus the switch SW2 is on, very stable coordinate detection can be performed without being affected by noise caused by the display device.

The control circuit 18 in the present embodiment is to avoid concentration of processing on the microprocessor 26, and the control circuit 18 may be omitted.

In the present embodiment, the electrodes of the transparent sensor 12 are formed by ITO patterns of a transparent conductive material. However, the electrodes of the transparent sensor 12 may be formed as substantially transparent planar patterns by connecting a conductive material such as can be considered to be substantially transparent, for example a very thin conductive material having a width of 30 $\mu$m or less.

**Claims**

1. A position detecting device for detecting and inputting a position indicated by a finger or a stylus on a display device capable of refreshing display in each fixed period, the position detecting device comprising:

- a substantially transparent sensor disposed on the display device and formed by arranging a plurality of electrodes in each of an X-direction and a Y-direction orthogonal to each other, the electrodes being formed of a transparent conductive material or a conductive material having a width such that the conductive material is regarded as substantially transparent;

- an X-selecting circuit for selecting two sets of electrodes as a positive terminal and a negative terminal from the plurality of X-electrodes arranged in the X-direction;

- a Y-selecting circuit for selecting two sets of electrodes as a positive terminal and a negative terminal from the plurality of Y-electrodes arranged in the Y-direction;

- a driving signal generating circuit for generating signals shifted in phase from each other by 180° to be sent out from the transparent sensor as a positive driving signal and a negative driving signal;

- a differential amplifier for amplifying a difference between signals occurring in the positive terminal and the negative terminal selected by one, or respectively each, of the X-selecting circuit and the Y-selecting circuit;

- a balanced switching circuit for performing switching so as to connect the positive terminal and the negative terminal selected by the Y-selecting circuit or the X-selecting circuit to the driving signal generating circuit at a time of touch detection and connect the positive terminal and the negative terminal selected by the Y-selecting circuit or the X-selecting circuit to the differential amplifier at a time of stylus detection; and

- a processing circuit for determining the position indicated by the finger or the stylus from a distribution of strengths of signals output to the differential amplifier when the electrodes selected by the X-selecting circuit and the Y-selecting circuit are changed sequentially;

wherein at the time of the touch detection, the positive signal and the negative signal from the driving signal generating circuit are supplied respectively to the positive terminal and the negative terminal of one of the Y-selecting circuit and the X-selecting circuit, and the differential amplifier is connected to the positive terminal and the negative terminal of the other selecting circuit, and

at the time of the stylus detection, the positive terminal and the negative terminal of one, or respectively each, of the X-selecting circuit and the Y-selecting circuit are connected to the differential amplifier to detect a signal from the stylus.

2. The portion detecting device according to claim 1, further comprising:

a stylus for radiating an alternating-current electric field from an electrode at a tip portion, the stylus including a power supply retained by a battery or a capacitor, an alternating-current signal generating circuit for generating an alternating-current signal, a pen pressure detecting circuit for detecting pressure applied to the tip portion as switch information or pen pressure information, and a modulating circuit for changing a frequency or amplitude of the signal output from the alternating-current signal generating circuit on a basis of the information detected by the pen pressure detecting circuit.

3. The position detecting device according to claim 1 or 2,
wherein output of the differential amplifier is connected to a band-pass filter circuit, and a center frequency of the band-pass filter circuit is controlled to coincide with a frequency of the signals from the driving signal generating circuit at the time of the touch detection and is controlled to coincide with a frequency of the electric field radiated from the stylus at the time of the stylus detection.

4. The position detecting device according to claim 3,
wherein the frequency of the electric field radiated from the stylus is higher than the frequency of the signals from the driving signal generating circuit at the time of the touch detection.

5. The position detecting device according to claim 3 or 4,
wherein the band-pass filter circuit includes a parallel resonance circuit including a coil and a capacitor, and a switch connected in parallel with the parallel resonance circuit and controlled to be on or off, and the switch is controlled to be on for only a certain period each time the electrodes selected by the X-selecting circuit or the Y-selecting circuit are changed.

6. The position detecting device according to one of the claims 3 to 5,
wherein the stylus includes a pen pressure detecting circuit for detecting pen pressure and digitizing the pen pressure, and an ASK modulation circuit for changing the alternating-current signal applied to the electrode in time series by turning on or off the alternating-current signal on a basis of digital information output by the pen pressure detecting circuit.

7. The position detecting device according to one of the preceding claims,
wherein selection of the electrodes by the X-selecting circuit or the Y-selecting circuit is changed in timing synchronized with the refreshing period of the display device.

8. The position detecting device according one of the preceding claims,
wherein, at the time of the touch detection, the X-selecting circuit or the Y-selecting circuit selects the two sets of electrodes that are separated by an interval larger than a diameter of a finger contact area.

9. The position detecting device according to one of the preceding claims,
wherein, at the time of the stylus detection, the X-selecting circuit or the Y-selecting circuit selects the two sets of electrodes that are separated by an interval larger than a diameter of a radiation pattern of the alternating-current electric field from the stylus.

10. The position detecting device according to one of the preceding claims,
wherein a number of electrodes selected by the X-selecting circuit or the Y-selecting circuit as the positive terminal is the same as a number of electrodes selected by the X-selecting circuit or the Y-selecting circuit as the negative terminal.

11. The position detecting device according to one of the preceding claims, wherein the display device is a liquid crystal display device.

12. A combined sensor and display device for detecting and inputting a position indicated by a finger or a stylus thereon, comprising:

 a display device capable of refreshing display in each fixed period, and
 a position detecting device according to one of the preceding claims.

13. The combined sensor and display device according to claim 12,
wherein the processing circuit is further configured to determine a pen pressure detected by the stylus and ASK modulated onto the electric field radiated from the stylus.

14. The combined sensor and display device according to claim 12 or 13, wherein the display device is a liquid crystal display device.

# FIG.1

X1  X2 X3

12a

12c

12

Y1
Y2
Y3

12b

11

DIAGRAM SHOWING CONFIGURATION
OF TRANSPARENT SENSOR

# FIG.2

X1  X2  X3      12a    12c                                    12

12b                                            Yi

SECTIONAL VIEW OF TRANSPARENT SENSOR

# F I G . 3

EP 2 711 815 A2

DIAGRAM SHOWING CONFIGURATION OF POSITION DETECTING DEVICE

# FIG.4

IN THE CASE OF ONE DRIVING SIGNAL

# FIG.5

EQUIVALENT CIRCUIT IN THE CASE OF ONE DRIVING SIGNAL

EP 2 711 815 A2

# FIG.6

IN THE CASE OF TWO DRIVING SIGNALS

# FIG.7

EQUIVALENT CIRCUIT IN THE CASE OF TWO DRIVING SIGNALS

# FIG.8

TOUCH POSITION DETERMINING METHOD

# F I G . 9

DIAGRAM SHOWING INTERNAL CONFIGURATION OF SELECTING CIRCUIT

EP 2 711 815 A2

# FIG.10

X17 X19 X17+m

Y21-n  Y22-n  Y23-n

14

Y21  Y22  Y23

13

21

CONFIGURATION OF X PARTIAL SCANNING OPERATION

# FIG.11

VP

VL

VR

X17 X18 X19 X20 X21

SIGNAL LEVEL DISTRIBUTION IN X PARTIAL SCANNING OPERATION

# FIG.12

CONFIGURATION OF Y PARTIAL SCANNING OPERATION

# FIG.13

SIGNAL LEVEL DISTRIBUTION IN Y PARTIAL SCANNING OPERATION

# FIG.14

EXAMPLE OF INTERNAL STRUCTURE OF STYLUS

# FIG.15

X PARTIAL SCANNING OPERATION OF STYLUS

# FIG.16

Y PARTIAL SCANNING OPERATION OF STYLUS

# FIG.17

EXAMPLE OF CIRCUIT OF STYLUS

# FIG.18

0 1 0 1 1 1 0 1 0 1

Start signal

SIGNAL WAVEFORMS OF STYLUS

# FIG.19

CONCRETE EXAMPLE OF BAND-PASS FILTER CIRCUIT

# FIG.20

OPERATION OF BAND-PASS FILTER CIRCUIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6370326 B
- JP 2007164356 A
- JP 2005537570 A
- JP 2006517319 T
- JP HEI6250772 B
- JP HEI6337752 B
- JP HEI8179871 B